# EUROPEAN PATENT APPLICATION

(11) **EP 4 804 507 A1**
(43) Date of publication of application: **09.09.2026**
(21) Application number: 25190697.0
(22) Date of filing: 21.07.2025
(51) Int. Cl.: H04N 1/00

(54) **INFORMATION PROCESSING APPARATUS, INFORMATION PROCESSING SYSTEM, AND PROGRAM**

(30) Priority: 03.03.2025 JP 2025032863
(71) Applicant: FUJIFILM Business Innovation Corp., Minato-ku Tokyo (JP)
(72) Inventor: HAYASHI, Manabu, Yokohama-shi, Kanagawa (JP)
(74) Representative: Becker Kurig & Partner Patentanwälte mbB

(57) **Abstract**

An information processing apparatus includes a processor, and a memory, in which the processor is configured to: store one or plural pieces of notification information to be notified to a user who uses an information processing apparatus in the memory; permit a user who has undergone authentication set in advance to log in as an administrator user who manages the information processing apparatus; manage whether each notification information stored in the memory is in a read state in which the administrator user has checked content or in an unread state in which the administrator user has not checked the content; display the notification information in the read state, in a first display mode, and display the notification information in the unread state, in a second display mode, in a case where the notification information stored in the memory is displayed and the user who uses the information processing apparatus is logged in as the administrator user; and display both the notification information in the read state and the notification information in the unread state, in the second display mode, in a case where the user who uses the information processing apparatus is a general user other than the administrator user.

## Description

### BACKGROUND OF THE INVENTION

### (i) Field of the Invention

The present disclosure relates to an information processing apparatus, an information processing system, and a program.

### (ii) Description of Related Art

JP2017-016393A discloses an image processing apparatus that makes maintenance and management work efficient by periodically inquiring a server about the presence or absence of a message, from the image processing apparatus, and acquiring the message from the server and displaying the message on a display unit in a case where there is a message required to be notified to a customer user.

### SUMMARY OF THE INVENTION

In an information processing apparatus such as an image forming apparatus, there is a case where notice information or the like that is desired to be notified to a user from a manufacturer of the information processing apparatus is displayed on an operation panel or the like as notification information. In order to prevent overlooking of such notification information, the notification information of which the content has not yet been checked may be displayed in an unread state, and may be displayed in a read state in a case where the content is checked.

However, in the information processing apparatus such as the image forming apparatus, a user selected from among users who use the information processing apparatus may be an administrator user, and the administrator user may manage the information processing apparatus. In the notification information desired to be notified to the user, there is notification information that only the administrator user needs to grasp, such as notification information related to replacement of consumable items, and there is notification information desired to be notified to both the administrator user and a general user, such as a change of the operability due to the firmware update.

Therefore, in a case where the display is switched between the unread state and the read state depending on whether or not the administrator user has checked the content of the notification information, the general user may overlook new notification information. However, in a case where the display of the notification information is switched from the unread state to the read state due to the general user who has checked the new notification information, the administrator user may not be able to grasp the notification information.

In a case where authentication is performed for all the users in a case where the information processing apparatus is used, and the management of the unread/read state of the notification information is performed for all the users including the administrator user and the general user, it is possible to eliminate such an issue. However, in a usage form in which authentication is not performed for all the users in the first place, it is not possible to realize such an elimination method. Further, in a usage form in which the authentication of the user is performed by an external authentication server or the like in a unit of a company, the number of users may be a huge number of several thousands or tens of thousands, and it is not practical to manage the unread/read state for each user.

An object of the present disclosure is to provide an information processing apparatus, an information processing system, and a program that can, in a case where there are an administrator user and a general user among users who use the information processing apparatus, enable the administrator user to grasp new notification information and prevent the general user from overlooking the new notification information in a case where notification information is displayed to the user.

According to a first aspect of the present disclosure, there is provided an information processing apparatus including: a processor; and a memory, in which the processor is configured to: store one or a plurality of pieces of notification information to be notified to a user who uses an information processing apparatus in the memory; permit a user who has undergone authentication set in advance to log in as an administrator user who manages the information processing apparatus; manage whether each notification information stored in the memory is in a read state in which the administrator user has checked content or in an unread state in which the administrator user has not checked the content; display the notification information in the read state, in a first display mode, and display the notification information in the unread state, in a second display mode, in a case where the notification information stored in the memory is displayed and the user who uses the information processing apparatus is logged in as the administrator user; and display both the notification information in the read state and the notification information in the unread state, in the second display mode, in a case where the user who uses the information processing apparatus is a general user other than the administrator user.

According to a second aspect of the present disclosure, in the information processing apparatus according to the first aspect, the processor may be configured to: manage a posting period that is a period in which the notification information is displayed to the general user in the second display mode; and display both the notification information in the read state and the notification information in the unread state, in the first display mode, after the posting period has elapsed, in a case where the notification information stored in the memory is displayed and the user who uses the information processing apparatus is the general user other than the administrator user.

According to a third aspect of the present disclosure, in the information processing apparatus according to the second aspect, the processor may be configured to: display a total count of the notification information in the unread state in a case where the user who uses the information processing apparatus is logged in as the administrator user, and display a total count of the notification information of which a current date and time is within the posting period in a case where the user who uses the information processing apparatus is the general user other than the administrator user.

According to a fourth aspect of the present disclosure, in the information processing apparatus according to the second or third aspect, the processor may be configured to: receive a change of the posting period by the administrator user.

According to a fifth aspect of the present disclosure, in the information processing apparatus according to any one of the first to fourth aspects, the processor may be configured to: receive notification information required to be notified to the user from an external apparatus and store the received notification information in the memory.

According to a sixth aspect of the present disclosure, in the information processing apparatus according to the fifth aspect, the processor may be configured to: overwrite the notification information stored in the memory with the received notification information in a case where an identifier of the notification information received from the external apparatus is identical to an identifier of the notification information stored in the memory.

According to a seventh aspect of the present disclosure, in the information processing apparatus according to the fifth or sixth aspect, the processor may be configured to: store information related to update processing executed in the information processing apparatus in the memory as the notification information, in addition to the notification information received from the external apparatus.

According to an eighth aspect of the present disclosure, in the information processing apparatus according to the seventh aspect, the update processing may be update processing of firmware for controlling an operation of the information processing apparatus, and the processor may be configured to: display notification information related to an advance notice of update of the firmware in the first display mode in a case where the update processing of the firmware is executed in the information processing apparatus, regardless of whether the notification information related to the advance notice of update of the firmware is in the read state or in the unread state.

According to a ninth aspect of the present disclosure, in the information processing apparatus according to the eighth aspect, the processor may be configured to: receive notification information related to the advance notice of update, which includes version information of the firmware, from the external apparatus and display the notification information in the first display mode, regardless of whether the notification information related to the advance notice of update of the firmware is in the read state or in the unread state, in a case where the update processing is executed and a version of the updated firmware matches a version indicated by the version information included in the notification information related to the advance notice of update.

According to a tenth aspect of the present disclosure, in the information processing apparatus according to the eighth aspect, the processor may be configured to: receive notification information related to the advance notice of update of the firmware, which includes version information of the firmware, from the external apparatus and display the notification information related to the advance notice of update of the firmware and notification information indicating that the update processing of the firmware is executed, in association with each other, in a case where the update processing is executed and a version of the updated firmware matches a version indicated by the version information included in the notification information related to the advance notice of update.

According to an eleventh aspect of the present disclosure, there is provided an information processing system including: a management server that manages notification information to be notified to a user who uses an information processing apparatus; and the information processing apparatus including a processor, and a memory, in which the processor is configured to: receive notification information required to be notified to the user from the management server and store one or a plurality of pieces of received notification information in the memory; permit a user who has undergone authentication set in advance to log in as an administrator user who manages the information processing apparatus; manage whether each notification information stored in the memory is in a read state in which the administrator user has checked content or in an unread state in which the administrator user has not checked the content; display the notification information in the read state, in a first display mode, and display the notification information in the unread state, in a second display mode, in a case where the notification information stored in the memory is displayed and the user who uses the information processing apparatus is logged in as the administrator user; and display both the notification information in the read state and the notification information in the unread state, in the second display mode, in a case where the user who uses the information processing apparatus is a general user other than the administrator user.

According to a twelfth aspect of the present disclosure, there is provided a program causing a computer to execute a process including: storing one or a plurality of pieces of notification information to be notified to a user who uses an information processing apparatus in a memory; permitting a user who has undergone authentication set in advance to log in as an administrator user who manages the information processing apparatus; managing whether each notification information stored in the memory is in a read state in which the administrator user has checked content or in an unread state in which the administrator user has not checked the content; displaying the notification information in the read state, in a first display mode, and displaying the notification information in the unread state, in a second display mode, in a case where the notification information stored in the memory is displayed and the user who uses the information processing apparatus is logged in as the administrator user; and displaying both the notification information in the read state and the notification information in the unread state, in the second display mode, in a case where the user who uses the information processing apparatus is a general user other than the administrator user.

With the information processing apparatus according to the first aspect of the present disclosure, in a case where there are the administrator user and the general user among the users who use the information processing apparatus, the administrator user may grasp the new notification information, and the general user may be prevented from overlooking the new notification information in a case where the notification information is displayed to the user.

With the information processing apparatus according to the second aspect of the present disclosure, the notification information may be displayed in the first display mode to the general user only within the set posting period.

With the information processing apparatus according to the third aspect of the present disclosure, the administrator user and the general user may be allowed to grasp the total count of the notification information of which the content is required to be checked.

With the information processing apparatus according to the fourth aspect of the present disclosure, the administrator user may change a period during which the notification information is displayed to the general user in the second display mode.

With the information processing apparatus according to the fifth aspect of the present disclosure, the notification information set in the external apparatus such as the external management server may be displayed to the user of the information processing apparatus.

With the information processing apparatus according to the sixth aspect of the present disclosure, the content of the notification information that has already been received by the information processing apparatus from the external apparatus may be changed.

With the information processing apparatus according to the seventh aspect of the present disclosure, the user who uses the information processing apparatus may be notified of the information related to the update processing executed in the information processing apparatus.

With the information processing apparatus according to the eighth aspect of the present disclosure, in a case where the update processing of the firmware is executed, the notification information related to the advance notice of update for which the content does not need to be checked may be prevented from being displayed in the second display mode.

With the information processing apparatus according to the ninth aspect of the present disclosure, in a case where the update processing of the firmware is executed, the notification information related to the advance notice of update corresponding to the version of the firmware on which the update processing is executed may be prevented from being displayed in the second display mode.

With the information processing apparatus according to the tenth aspect of the present disclosure, in a case where the update processing of the firmware is executed, it is easy to check that the update processing of the firmware for which the advance notice of update is issued is executed.

With the information processing system according to the eleventh aspect of the present disclosure, in a case where there are the administrator user and the general user among the users who use the information processing apparatus, the administrator user may grasp the new notification information, and the general user may be prevented from overlooking the new notification information in a case where the notification information is displayed to the user.

With the program according to the twelfth aspect of the present disclosure, in a case where there are the administrator user and the general user among the users who use the information processing apparatus, the administrator user may grasp the new notification information, and the general user may be prevented from overlooking the new notification information in a case where the notification information is displayed to the user.

### BRIEF DESCRIPTION OF THE DRAWINGS

Exemplary embodiment(s) of the present invention will be described in detail based on the following figures, wherein:
FIG. 1 is a diagram showing a system configuration of an information processing system according to an exemplary embodiment of the present disclosure;
FIG. 2 is a block diagram showing a hardware configuration of an image forming apparatus 10 according to the exemplary embodiment of the present disclosure;
FIG. 3 is a block diagram showing a functional configuration of the image forming apparatus 10 according to the exemplary embodiment of the present disclosure;
FIG. 4 is a diagram showing an example of a notice information management table for managing notice information received from a management server 20 in the image forming apparatus 10;
FIG. 5 is a flowchart showing an operation in a case where the image forming apparatus 10 displays a menu screen on an operation panel;
FIG. 6 is a diagram showing an example of the menu screen displayed on the operation panel of the image forming apparatus 10;
FIG. 7 is a flowchart showing an operation in a case where a notice list is displayed on the operation panel of the image forming apparatus 10;
FIG. 8 is a diagram showing a display screen example of the notice list displayed to a user who is logged in as a machine administrator;
FIG. 9 is a diagram showing a display screen example of the notice list displayed to a general user who is not logged in as the machine administrator;
FIG. 10 is a flowchart showing an operation in a case where notice content is displayed in detail;
FIG. 11 is a diagram showing a detailed display example displayed to the user who is logged in as the machine administrator;
FIG. 12 is a diagram showing a detailed display example displayed to the general user who is not logged in as the machine administrator;
FIG. 13 is a diagram showing an example of a notice information management table stored on the management server 20 side;
FIG. 14 is a diagram showing an example of a notice information management table stored in a data storage unit 37 of the image forming apparatus 10;
FIG. 15 is a flowchart showing processing at the time of connection to the management server 20 in a modification example of the image forming apparatus 10 according to the exemplary embodiment of the present disclosure;
FIG. 16 is a flowchart showing processing after activation in the modification example of the image forming apparatus 10 according to the exemplary embodiment of the present disclosure;
FIG. 17 is a diagram showing a state in which the notice information named "FW update execution" having a notice information identifier "1006" is added to the notice information management table;
FIG. 18 is a diagram showing a display screen example in a case where notice information related to an advance notice of update of firmware and notice information indicating that update processing of the firmware is executed are displayed in association with each other;
FIG. 19 is a diagram showing a display screen example in a case where the notice information related to the advance notice of update of the firmware and the notice information indicating that the update processing of the firmware is executed are combined and displayed as one notice information; and
FIG. 20 is a diagram showing a display screen example in a case where the notice information related to the advance notice of update of the firmware and the notice information indicating that the update processing of the firmware is executed are combined and displayed as one notice information.

### DETAILED DESCRIPTION OF THE INVENTION

Hereinafter, an exemplary embodiment of the present disclosure will be described in detail with reference to the accompanying drawings.

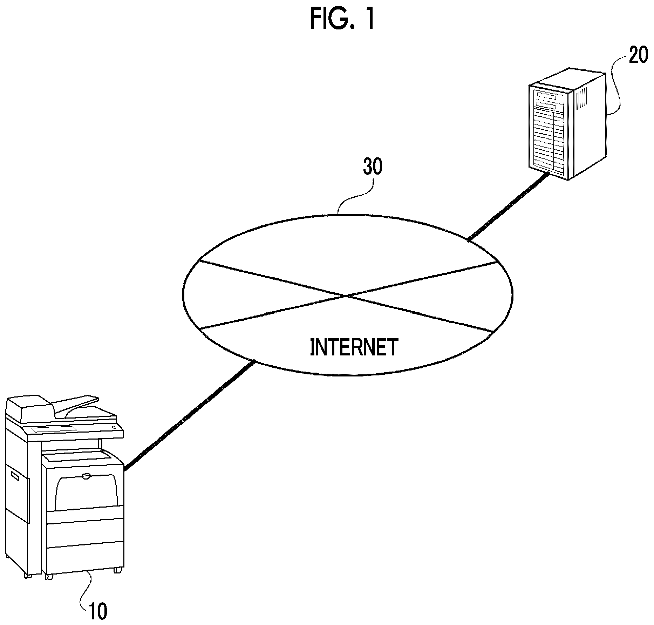

FIG. 1 is a diagram showing a system configuration of an information processing system according to the exemplary embodiment of the present disclosure.

As shown in FIG. 1, the information processing system according to the exemplary embodiment of the present disclosure is configured by an image forming apparatus 10 and a management server 20 that are connected to each other via a network, such as the Internet 30. In the present exemplary embodiment, only one image forming apparatus 10 is shown for simplification of description, but, in practice, a plurality of image forming apparatuses 10 are connected to the management server 20 via the Internet 30.

The image forming apparatus 10 is an information processing apparatus called a socalled multifunctional machine having a plurality of functions such as a printing function, a scanning function, a copying function, and a facsimile function, which is installed in an office of a company, a store, a convenience store, or the like. The management server 20 is a management apparatus that manages firmware incorporated in the image forming apparatus 10, manages notification information to be notified to a user who uses the image forming apparatus 10, and the like. Here, the firmware is a software program for controlling an operation of hardware or the like constituting the image forming apparatus 10.

The image forming apparatus 10 has a function of displaying, on an operation panel or the like, notification information such as notice information desired to be notified to the user from a manufacturer. For example, the user can be notified in advance that the functions and the operability are changed by updating the firmware of the image forming apparatus 10. Specifically, the notification information desired to be notified to the user from the manufacturer is stored in advance in the management server 20. Then, the image forming apparatus 10 accesses the management server 20 at the time of activation or the like, acquires newly stored notification information, and displays the notification information on the operation panel or the like. In order to prevent the user from overlooking such notification information, there is a case where the notification information of which the content has not yet been checked is displayed in an unread state, and in a case where the content is checked, the notification information is displayed in a read state.

Here, a user selected from among the users who use the image forming apparatus 10 may be set as an administrator user and may manage the image forming apparatus 10. The administrator user logs in, as the administrator user, to the image forming apparatus 10 by undergoing the authentication set in advance in a case of using the image forming apparatus 10. Then, the user who is logged in as the administrator user can perform various operations that cannot be performed by a general user other than the administrator user.

In the notification information desired to be notified to the user, there is notification information that only the administrator user needs to grasp, such as notification information related to replacement of consumable items, and there is notification information desired to be notified to both the administrator user and the general user, such as a change of the operability due to the firmware update.

Therefore, in a case where the display is switched between the unread state and the read state depending on whether or not the administrator user has checked the content of the notification information, the general user may overlook new notification information. However, in a case where the display of the notification information is switched from the unread state to the read state due to the general user who has checked the new notification information, the administrator user may not be able to grasp the notification information.

In a case where authentication is performed for all the users in a case where the information processing apparatus is used, and the management of the unread/read state of the notification information is performed for all the users including the administrator user and the general user, it is possible to eliminate such an issue. However, in a usage form in which authentication is not performed for all the users in the first place, it is not possible to realize such an elimination method. Further, in a usage form in which the authentication of the user is performed by an external authentication server or the like in a unit of a company, the number of users may be a huge number of several thousands or tens of thousands, and it is not practical to manage the unread/read state for each user.

Therefore, in the information processing system according to the present exemplary embodiment, in a case where processing as described below is executed, in a case where the notification information is displayed to the user of the image forming apparatus 10, the administrator user can grasp the new notification information, and the general user can be prevented from overlooking the new notification information.

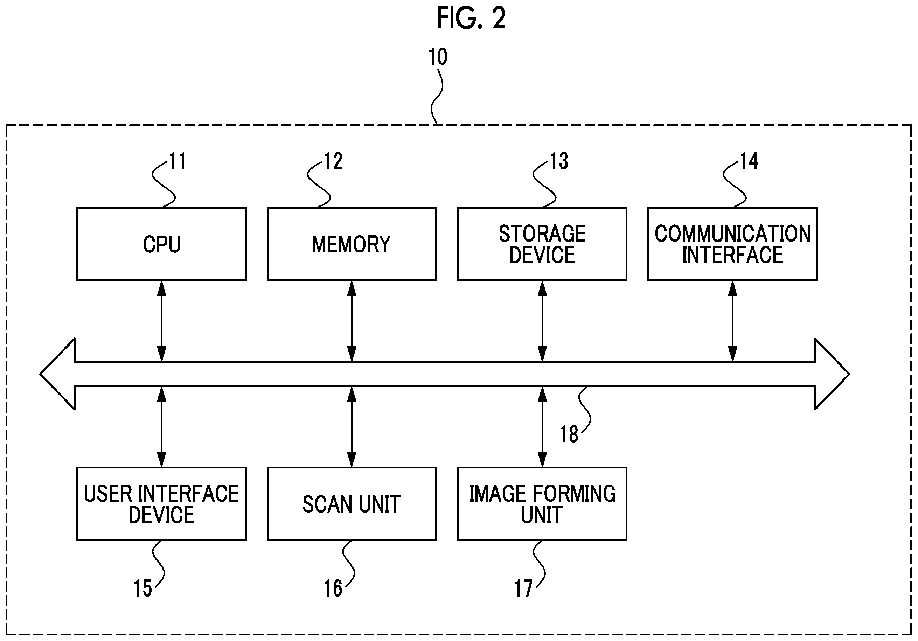

Next, FIG. 2 shows a hardware configuration of the image forming apparatus 10 in the information processing system according to the present exemplary embodiment.

The image forming apparatus 10 includes, as shown in FIG. 2, a CPU 11, a memory 12, a storage device 13 such as a hard disk drive, a communication interface (abbreviated as IF) 14 that transmits and receives data to and from an external apparatus or the like via the Internet 30, a user interface (abbreviated as UI) device 15 including a touch panel or a liquid crystal display and a keyboard, a scan unit 16, and an image forming unit 17. These components are connected to each other via a control bus 18.

The image forming unit 17 prints an image on a recording medium such as printing paper through processes such as charging, exposure, development, transfer, and fixing.

The CPU 11 is a processor that executes predetermined processing based on a control program stored in the memory 12 or the storage device 13 to control the operation of the image forming apparatus 10. In the present exemplary embodiment, it has been described in which the CPU 11 reads out and executes the control program stored in the memory 12 or the storage device 13, but the technology of the present disclosure is not limited to this. The control program may be provided in a form of being recorded on a computer-readable recording medium. For example, the program may be provided in a form of being recorded on an optical disk such as a compact disc (CD)-ROM and a digital versatile disc (DVD)-ROM, or in a form of being recorded on a semiconductor memory such as a universal serial bus (USB) memory and a memory card. The control program may be acquired from the external apparatus via a communication line connected to the communication interface 14. Further, for example, the control program may be provided as single application software or may be incorporated into software of each device of the image forming apparatus 10 as one function of the image forming apparatus 10.

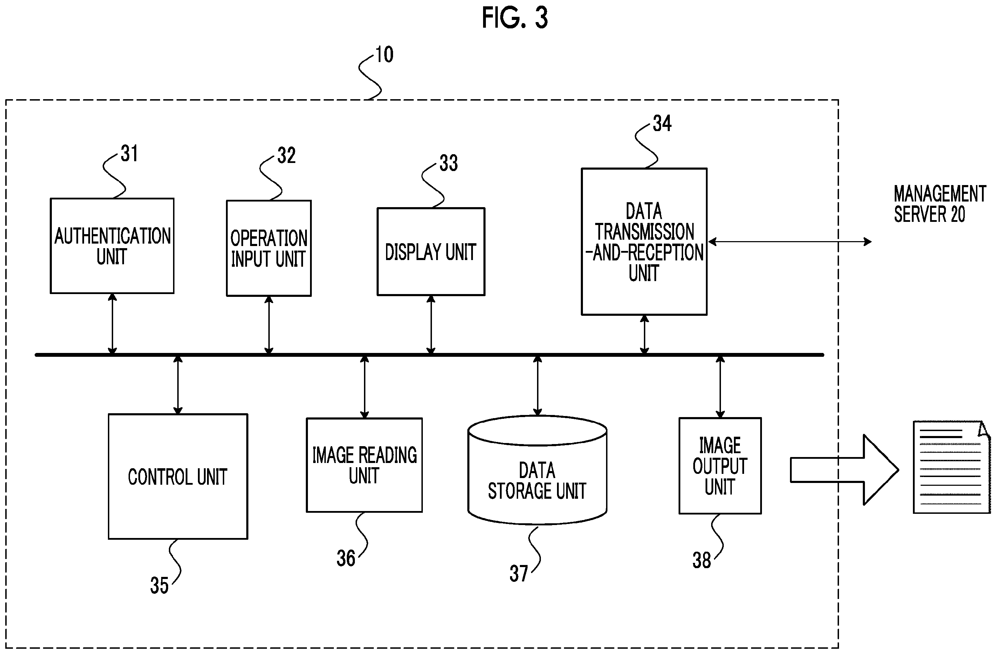

FIG. 3 is a block diagram showing a functional configuration of the image forming apparatus 10 carried out by executing the control program.

As shown in FIG. 3, the image forming apparatus 10 according to the present exemplary embodiment includes an authentication unit 31, an operation input unit 32, a display unit 33, a data transmission-and-reception unit 34, a control unit 35, an image reading unit 36, a data storage unit 37, and an image output unit 38.

The authentication unit 31 authenticates a user who attempts to use the image forming apparatus 10. For example, the authentication unit 31 authenticates the user by checking whether an input password matches a password set in advance. Alternatively, the authentication unit 31 may read identification information of an IC card using a reader to authenticate the user. Then, the authentication unit 31 permits the user who has undergone the authentication set in advance to log in as the administrator user who manages the image forming apparatus 10.

In the present exemplary embodiment, a case where a user who has undergone the authentication set in advance is treated as the administrator user and a user who uses the image forming apparatus 10 without logging in is treated as a general user will be described. However, depending on the usage form of the image forming apparatus 10, there may be a usage form in which even the general user needs to log in after being authenticated.

The data transmission-and-reception unit 34 transmits and receives data to and from the external apparatus such as the management server 20.

The control unit 35 controls an overall operation of the image forming apparatus 10, acquires the notification information from the management server 20 via the data transmission-and-reception unit 34, and stores the notification information in the data storage unit 37. The data storage unit 37 stores various types of data, such as the notification information acquired by the control unit 35 and firmware (FW) for controlling the operation of the image forming apparatus 10. In the following description, the notification information desired to be notified to the user will be described as the notice information.

The display unit 33 is controlled by the control unit 35 and displays various types of information to the user. The operation input unit 32 inputs information on various operations performed by the user. The image output unit 38 outputs the image onto the recording medium such as printing paper under control of the control unit 35. The image reading unit 36 reads an original document image from a set original document under the control of the control unit 35.

For example, the control unit 35 accesses the management server 20 at the time of activation, and acquires, in a case where new notice information is stored in the management server 20, the new notice information. Then, the control unit 35 stores the one or a plurality of pieces of acquired notice information to be notified to the user who uses the image forming apparatus 10 in the data storage unit 37.

In the present exemplary embodiment, a case has been described in which the control unit 35 receives the notice information required to be notified to the user from the management server 20 as the external apparatus, and stores the received notice information in the data storage unit 37, but the technology of the present disclosure is not limited to such a case.

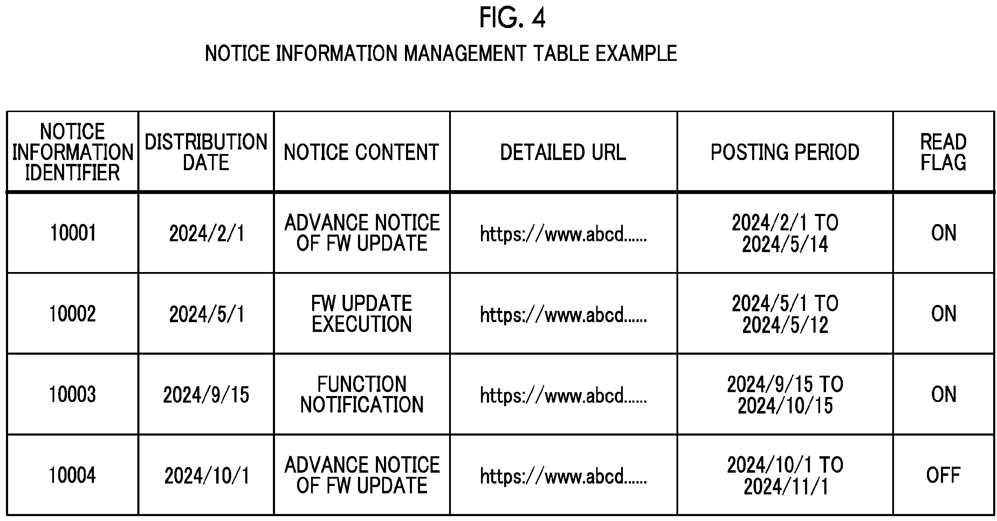

Then, the control unit 35 manages whether each notice information stored in the data storage unit 37 is in a read state in which the administrator user has checked the content or an unread state in which the administrator user has not checked the content. For example, the control unit 35 manages the notice information received from the management server 20 by using a notice information management table as shown in FIG. 4. The notice information management table is stored in the data storage unit 37.

The notice information management table shown in FIG. 4 is composed of items such as a notice information identifier, a distribution date, notice content, a detailed URL, a posting period, and a read flag, as an example.

Here, the notice information identifier is an identifier for managing each of the plurality of pieces of notice information. In addition, the notice content is information indicating notification content of each notice information. For example, the notice information in which the notice content is an advance notice of firmware (FW) update is notice information for notifying the user that the firmware update will be executed in the future. In addition, the notice information in which the notice content is the FW update execution is notice information for notifying the user that the update of the firmware is executed. Further, the detailed URL is a URL for checking details of the notification content.

The posting period is a period for displaying the notice information in the unread state to the general user. The notice information of which the current date and time is within the posting period is displayed in the unread state to the general user.

In addition, the read flag is information for managing whether or not the machine administrator who is the administrator user has checked the notification content of each notice information. A case where the read flag is on indicates a state in which the administrator user has already checked the notification content of the notice information. In addition, a case where the read flag is off indicates a state in which the administrator user has not yet checked the notification content of the notice information.

In a case where the user who uses the image forming apparatus 10 is logged in as the administrator user in a case of displaying the notice information stored in the data storage unit 37 on the operation panel, the control unit 35 displays the read-state notice information in which the read flag is on, in the read state that is a first display mode. In addition, the control unit 35 displays the unread-state notice information in which the read flag is off, in the unread state that is a second display mode.

In a case where the user who uses the image forming apparatus 10 is the general user other than the administrator user, the control unit 35 displays the notice information in both the read state and the unread state as the unread state that is the second display mode. Here, in the present exemplary embodiment, the control unit 35 manages the posting period that is a period during which the notice information is displayed in the unread state to the general user. Therefore, in a case where the user who uses the image forming apparatus 10 is the general user in a case of displaying the notice information stored in the data storage unit 37, the control unit 35 displays, in the read state, the notice information in both the on state in which the read flag is in the read state and the off state in which the read flag is in the unread state, after the posting period has elapsed.

Further, in a case where the user who uses the image forming apparatus 10 is logged in as the administrator user, the control unit 35 may display a total count of the notice information in the unread state, and display a total count of the notice information of which the current date and time is within the posting period in a case where the user who uses the image forming apparatus 10 is the general user.

In addition, the control unit 35 may receive the change of the posting period based on the operation of the administrator user.

Each of the plurality of pieces of notice information is managed by the notice information identifier, and in a case where an identifier of the notice information received from the management server 20 is identical to an identifier of the notice information stored in the data storage unit 37, the control unit 35 may overwrite the notice information stored in the data storage unit 37 with the notice information received from the management server 20.

The control unit 35 stores information related to the update processing executed in the image forming apparatus 10 in the data storage unit 37 as the notice information, in addition to the notice information received from the management server 20. For example, the update processing is update processing of the firmware for controlling the operation of the image forming apparatus 10. Then, in a case where the update processing of the firmware is executed in the image forming apparatus 10, the control unit 35 displays the notice information of the advance notice of update in the read state regardless of whether the notice information related to the advance notice of update of the firmware is in the read state or in the unread state. In addition to the update processing of the firmware, update processing of an installed application program and the like correspond to the update processing.

Next, the operation of the image forming apparatus 10 according to the present exemplary embodiment will be described in detail with reference to the accompanying drawings.

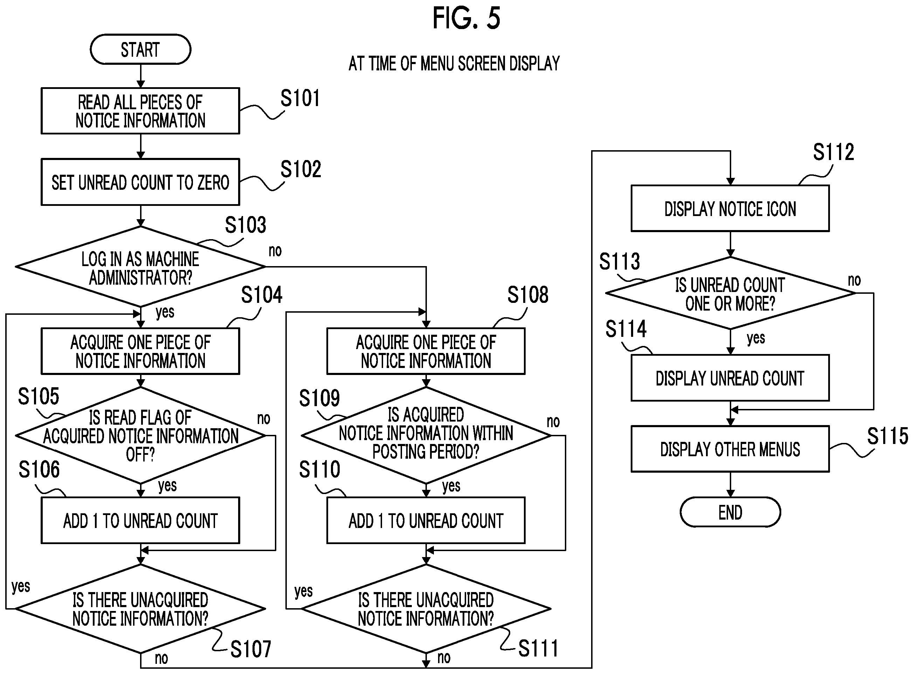

First, the operation of the image forming apparatus 10 in a case where a menu screen is displayed on the operation panel will be described in detail with reference to a flowchart of FIG. 5.

First, in a case of displaying the menu screen, the control unit 35 reads all pieces of notice information stored in the data storage unit 37 in step S101. Then, in step S102, the control unit 35 sets an unread count to zero.

Next, in step S103, the control unit 35 determines whether or not the user who uses the image forming apparatus 10 is the administrator user, that is, whether or not the user is logged in as the machine administrator.

In a case where it is determined in step S103 that the user is logged in as the machine administrator, the control unit 35 acquires one unprocessed notice information from the plurality of pieces of read notice information in step S104. Then, in step S105, the control unit 35 determines whether or not the read flag of the acquired notice information is off.

In a case where it is determined in step S105 that the read flag of the acquired notice information is off, the control unit 35 adds 1 to the unread count in step S106. In a case where it is determined in step S105 that the read flag of the acquired notice information is not off, that is, the read flag of the acquired notice information is on, the control unit 35 maintains the unread count without change.

Then, in step S107, the control unit 35 determines whether or not there is unacquired notice information among the plurality of pieces of read notice information. In a case where it is determined in step S107 that there is the unacquired notice information, the control unit 35 repeats the processing of steps S104 to S106.

In a case where it is determined in step S103 that the user is not logged in as the machine administrator, the control unit 35 acquires one piece of unprocessed notice information from the plurality of pieces of read notice information in step S108. Then, in step S109, the control unit 35 determines whether or not the acquired notice information is within the posting period.

In a case where it is determined in step S109 that the acquired notice information is within the posting period, the control unit 35 adds 1 to the unread count in step S110. In a case where it is determined in step S109 that the acquired notice information is not within the posting period, that is, the acquired notice information is outside the posting period, the control unit 35 maintains the unread count without change.

Then, in step S111, the control unit 35 determines whether or not there is the unacquired notice information among the plurality of pieces of read notice information. In a case in which it is determined in step S111 that there is the unacquired notice information, the control unit 35 repeats the processing of steps S108 to S110.

Further, in a case where it is determined in step S107 and step S111 that there is no unacquired notice information, the control unit 35 displays a notice icon on the operation panel in step S112. Then, in step S113, the control unit 35 determines whether or not the unread count is one or more.

In a case where it is determined in step S113 that the unread count is one or more, the control unit 35 displays a value of the unread count on the notice icon in step S114. In a case where it is determined in step S113 that the unread count is not one or more, that is, in a case where the unread count is zero, the control unit 35 does not display the value of the unread count.

Finally, in step S115, the control unit 35 displays other menu displays such as printing and scanning on the operation panel, and ends the processing.

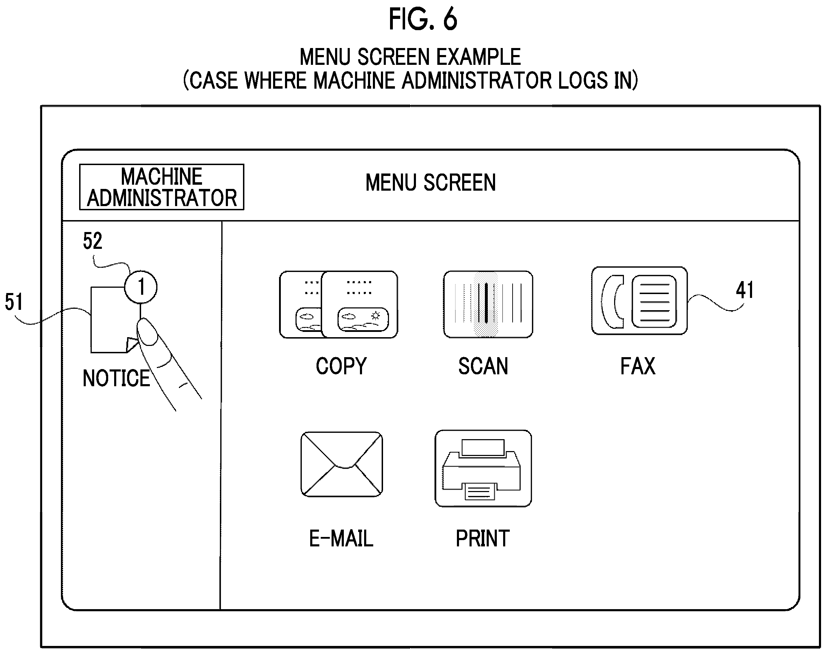

FIG. 6 shows an example of the menu screen displayed as described above. FIG. 6 shows an example of the menu screen in a case where the user is logged in as the machine administrator.

Referring to FIG. 6, it can be seen that a notice icon 51 is displayed on the menu screen, and an unread count icon 52 is displayed on an upper right side of the notice icon 51. In FIG. 6, the unread count icon 52 is displayed as "1", which indicates that there is one piece of notice information for which the machine administrator has not checked the content. In addition, in the menu screen of FIG. 6, menu icons 41 for using the functions such as copy, scan, and fax are also displayed.

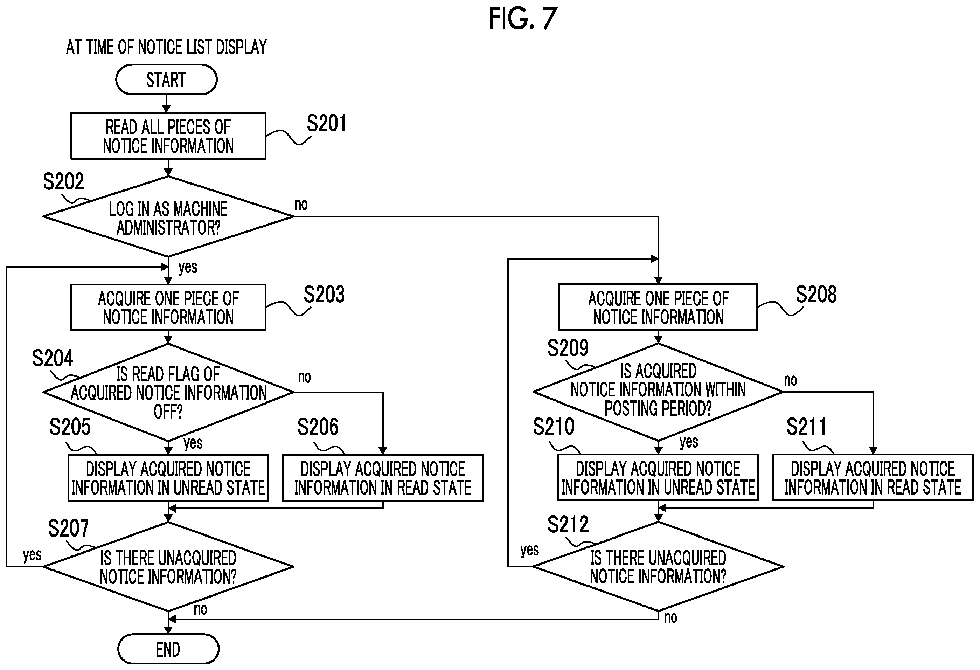

In a case where the user operates the notice icon 51 on the menu screen of FIG. 6, a notice list is displayed. The operation in a case where the notice list is displayed will be described with reference to a flowchart of FIG. 7.

First, in a case of displaying the notice list, the control unit 35 reads all pieces of notice information stored in the data storage unit 37 in step S201. Then, in step S202, the control unit 35 determines whether or not the user who uses the image forming apparatus 10 is the administrator user, that is, whether or not the user is logged in as the machine administrator.

In a case where it is determined in step S202 that the user is logged in as the machine administrator, the control unit 35 acquires one unprocessed notice information from the plurality of pieces of read notice information in step S203. Then, in step S204, the control unit 35 determines whether or not the read flag of the acquired notice information is off.

In a case where it is determined in step S204 that the read flag of the acquired notice information is off, the control unit 35 displays the acquired notice information on the operation panel in the unread state in step S205. In addition, in a case where it is determined in step S204 that the read flag of the acquired notice information is not off, that is, the read flag of the acquired notice information is on, in step S206, the control unit 35 displays the acquired notice information on the operation panel in the read state.

Then, in step S207, the control unit 35 determines whether or not there is the unacquired notice information among the plurality of pieces of read notice information. In a case in which it is determined in step S207 that there is the unacquired notice information, the control unit 35 repeats the processing of steps S203 to S206.

In addition, in a case where it is determined in step S202 that the user is not logged in as the machine administrator, the control unit 35 acquires one unprocessed notice information from the plurality of pieces of read notice information in step S208. Then, in step S209, the control unit 35 determines whether or not the acquired notice information is within the posting period.

In a case where it is determined in step S209 that the acquired notice information is within the posting period, the control unit 35 displays the acquired notice information on the operation panel in the unread state in step S210. In addition, in a case where it is determined in step S209 that the acquired notice information is not within the posting period, that is, the acquired notice information is outside the posting period, the control unit 35 displays the acquired notice information on the operation panel in a read state in step S211.

Then, in step S212, the control unit 35 determines whether or not there is the unacquired notice information among the plurality of pieces of read notice information. In a case where it is determined in step S212 that there is the unacquired notice information, the control unit 35 repeats the processing of steps S208 to S211.

Further, in a case where it is determined in step S207 and step S212 that there is no unacquired notice information, the control unit 35 ends the processing.

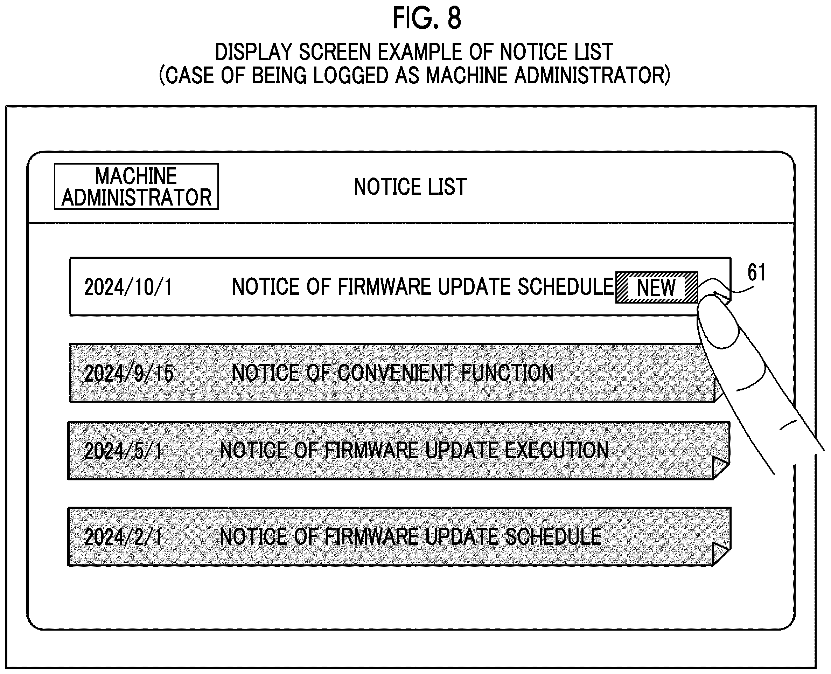

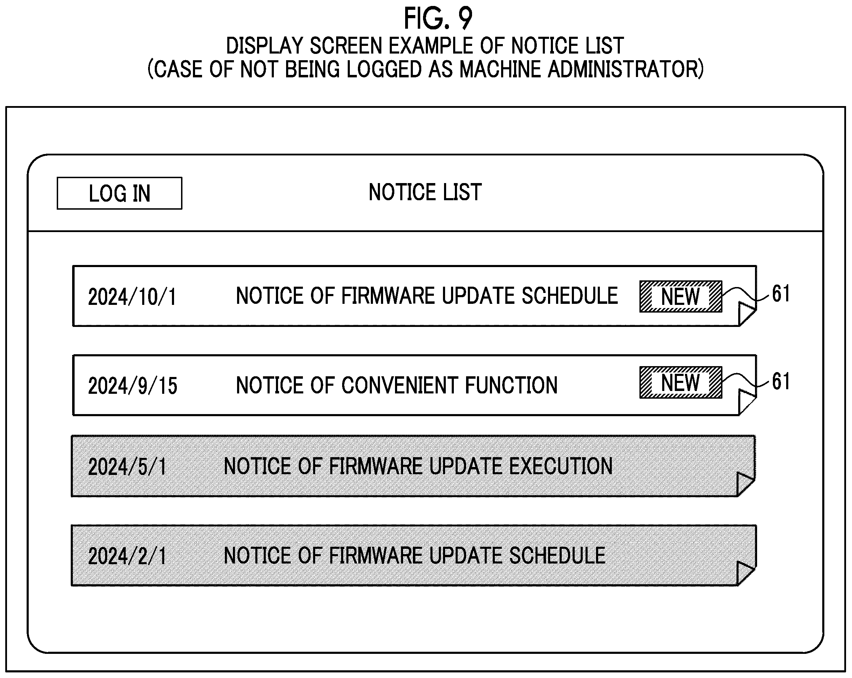

FIGS. 8 and 9 show display screen examples of the notice list displayed as described above.

The notice list shown in FIG. 8 is a display screen in which the notice information is displayed in a list based on the notice information management table shown in FIG. 4 to the user who is logged in as the machine administrator. Therefore, only one piece of notice information for which the read flag is off is displayed in the unread state. Specifically, a new arrival display icon 61 is displayed in a superimposed manner on the notice information named "notice of firmware update schedule", to indicate that the notice information is in the unread state.

In addition, the notice list shown in FIG. 9 is a display screen on which the notice information is displayed in a list based on the notice information management table shown in FIG. 4 to the general user who is not logged in as the machine administrator. In addition, the notice list shown in FIG. 9 is a display screen in a case where the current date and time is displayed as October 2, 2024. Referring to FIG. 4, the notice information within the posting period at a time point of October 2, 2024 is two pieces of notice information having the notice information identifiers "10003" and "10004". Therefore, on the display screen shown in FIG. 9, these two pieces of notice information are displayed in the unread state. Specifically, the new arrival display icon 61 is displayed in a superimposed manner on the notice information named "notice of firmware update schedule" and the notice information named "notice of convenient function", so that it is indicated that the two pieces of notice information are in the unread state.

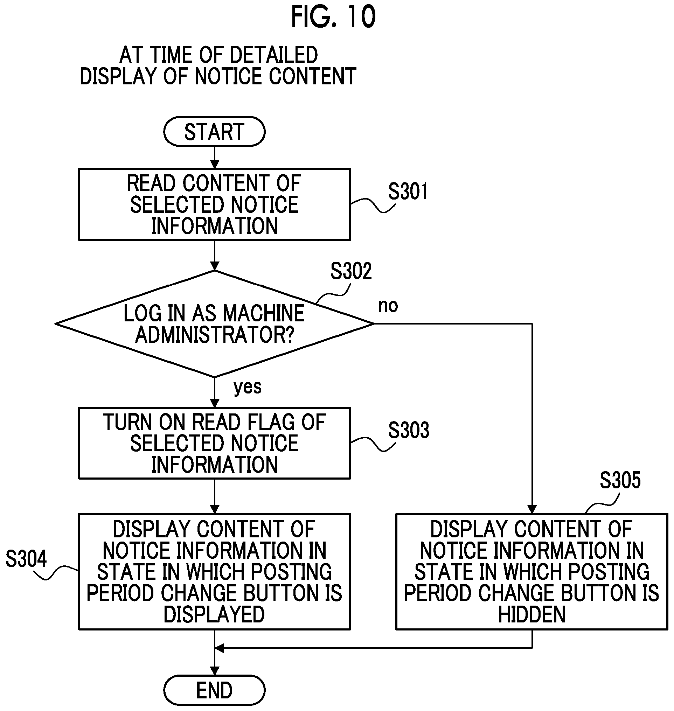

As shown in FIG. 8, in a case where the user selects one notice information on the display screen of the notice list, details of the notice content are displayed. The operation in a case of detailed display of the notice content will be described with reference to a flowchart of FIG. 10.

First, in a case of displaying the details of the notice content, the control unit 35 reads the content of the selected notice information from the data storage unit 37 in step S301. Then, in step S302, the control unit 35 determines whether or not the user who uses the image forming apparatus 10 is the administrator user, that is, whether or not the user is logged in as the machine administrator.

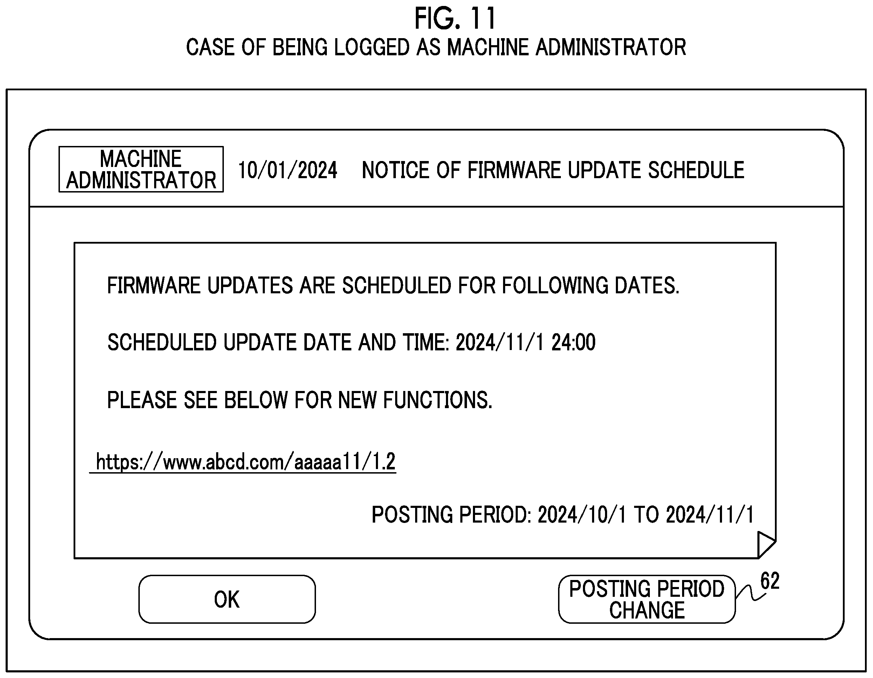

In a case where it is determined in step S302 that the user is logged in as the machine administrator, the control unit 35 turns on the read flag of the selected notice information in step S303. Then, in step S304, the control unit 35 displays the content of the notice information on the operation panel in a state in which a posting period change button is displayed. FIG. 11 shows a detailed display example of the notice information displayed as described above. FIG. 11 is a detailed display example displayed to the user who is logged in as the machine administrator, in which it can be seen that a posting period change button 62 is displayed.

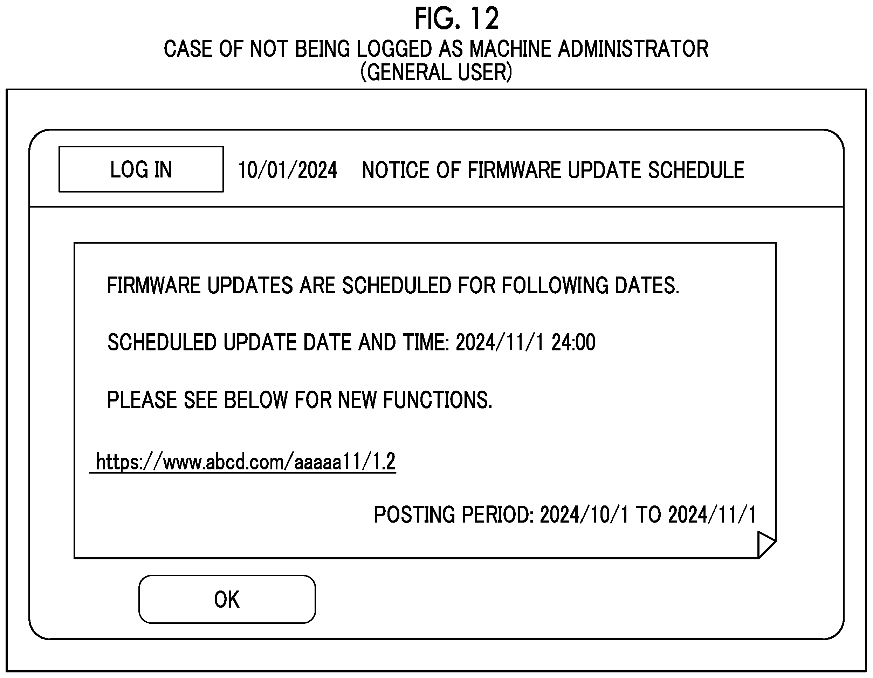

Then, in a case where it is determined in step S302 that the user is not logged in as the machine administrator, the control unit 35 displays the content of the notice information on the operation panel in step S305 in a state in which the posting period change button is hidden. FIG. 12 shows a detailed display example of the notice information displayed as described above. FIG. 12 is a detailed display example displayed to the general user who is not logged in as the machine administrator, in which it can be seen that the posting period change button 62 is not displayed.

### [Modification Example of Notice Information Management Table]

With the information processing system described above, the notice information stored in the management server 20 is displayed on the operation panel of the image forming apparatus 10. However, in a case where the update of the firmware is executed, the notice information of the advance notice of update of the firmware is not required. In addition, in a case where the content of the notice information stored in the management server 20 and acquired by the image forming apparatus 10 is desired to be changed on the management server 20 side, notice information including unnecessary content is also displayed simultaneously in a case where the separate notice information is merely regenerated and stored. Further, in a case where the detailed content of the new firmware can be checked at the time of the advance notice of update of the firmware, the detailed content of the firmware cannot be checked in a case where the notice information of the advance notice of update of the firmware is deleted merely because the update of the firmware is executed.

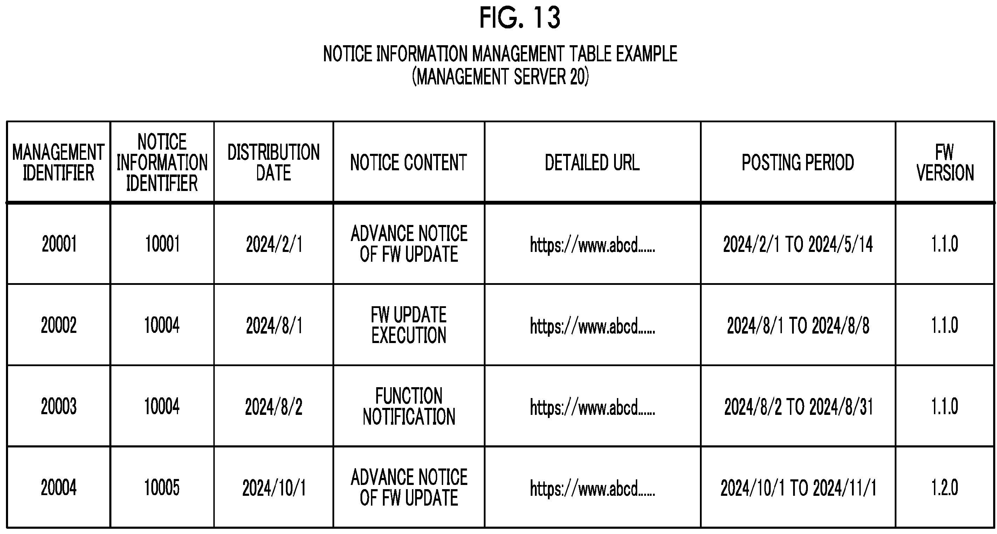

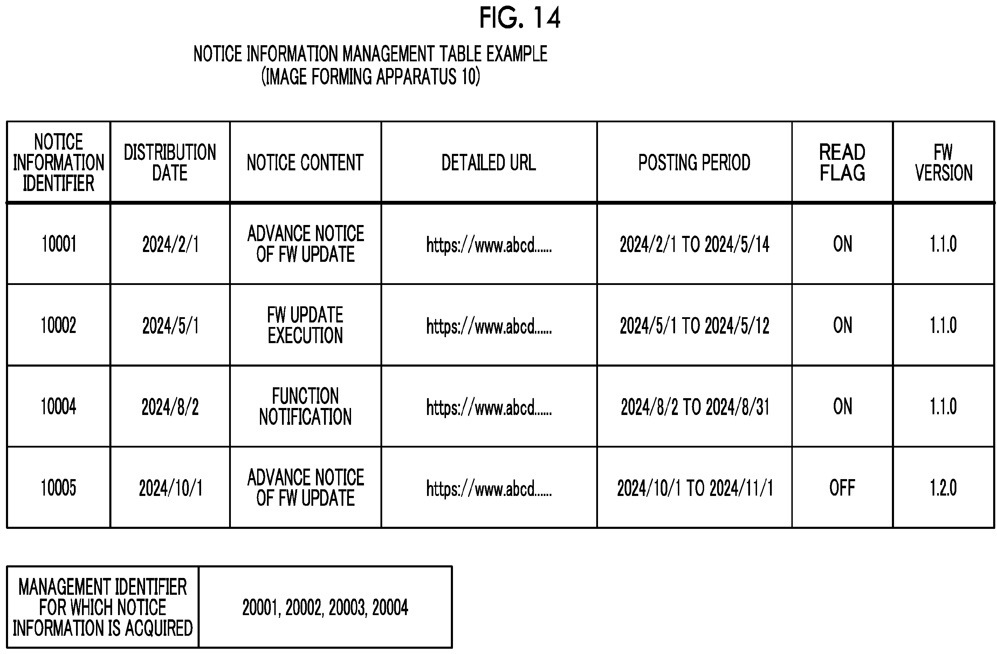

Therefore, in a modification example of the present exemplary embodiment described below for eliminating such an issue, the display of the notice information is controlled by using the notice information management table shown in FIGS. 13 and 14.

FIG. 13 shows an example of a notice information management table stored on the management server 20 side. In addition, FIG. 14 shows an example of a notice information management table stored in the data storage unit 37 of the image forming apparatus 10.

The notice information management table on the management server 20 side shown in FIG. 13 is composed of items such as a management identifier, a notice information identifier, a distribution date, a notice content, a detailed URL, a posting period, and a FW version, as an example.

The management identifier is an identifier newly set in a case where the content of the notice information is changed. In the notice information management table shown in FIG. 13, it can be seen that, even in the notice information with the notice information identifier " 10004", different management identifiers "20002" and "20003" are set because the posting period has been changed.

In addition, the notice information management table shown in FIG. 14 is composed of items such as a notice information identifier, a distribution date, a notice content, a detailed URL, a posting period, a read flag, and a FW version, as an example. The notice information management table shown in FIG. 14 is obtained by adding the item of the FW version to the notice information management table shown in FIG. 4. In addition, in the image forming apparatus 10 in the modification example, the management identifier of the notice information acquired from the management server 20 is stored in the data storage unit 37.

In the modification example of the present exemplary embodiment, the control unit 35 of the image forming apparatus 10 accesses the management server 20 at the time of activation or the like, and specifies the unacquired notice information by comparing the management identifier for which the notice information is acquired, which is stored in the management server 20, with the management identifier of the notice information stored in the data storage unit 37. For example, with reference to FIGS. 13 and 14, the notice information having the management identifier "20004" is specified as not acquired.

Then, the control unit 35 acquires the unacquired notice information from the management server 20, and in a case where the identifier of the notice information acquired from the management server 20 is identical to the identifier of the notice information stored in the data storage unit 37, overwrites the notice information stored in the data storage unit 37 with the notice information acquired from the management server 20.

Referring to FIG. 14, a state is shown in which the notice information having the notice information identifier "10004" is overwritten by the notice information having the management identifier "20003".

In addition, in the notice information management table shown in FIG. 14, information related to the FW version is managed for each notice information. Therefore, the control unit 35 receives the notice information related to the advance notice of update, which includes the version information of the firmware, from the management server 20, and displays the notice information in the read state, regardless of whether the notice information related to the advance notice of update of the firmware is in the read state or in the unread state, in a case where the update processing of the firmware is executed and a version of the updated firmware matches the version indicated by the version information included in the notice information related to the advance notice of update. That is, in a case where the update processing of the firmware is executed, it is not required to set the advance notice of update of the firmware to the unread state, and thus the advance notice of update of the firmware is forcibly set to the read state.

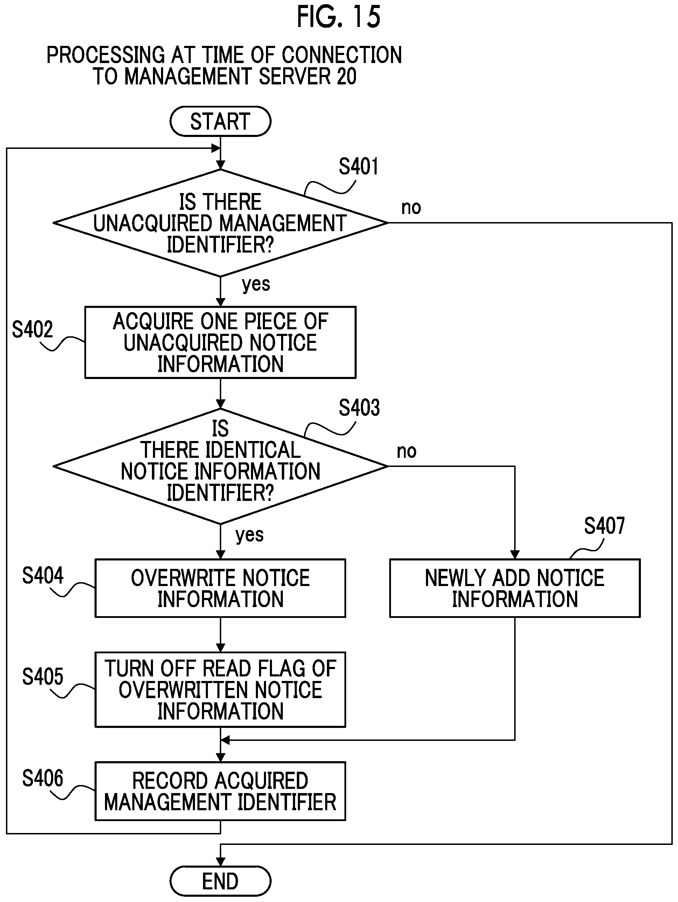

Next, processing at the time of connection to the management server 20 in the modification example of the image forming apparatus 10 according to the present exemplary embodiment will be described with reference to a flowchart of FIG. 15.

First, in a case of the connection to the management server 20, in step S401, the control unit 35 determines whether or not there is an unacquired management identifier by referring to the notice information management table of the management server 20. Specifically, the control unit 35 determines whether or not a management identifier other than the management identifier for which the notice information as shown in FIG. 14 is acquired is present in the notice information management table of the management server 20. For example, in a case where the notice information of the management identifier "20005" is stored in the notice information management table of the management server 20, the control unit 35 determines that the notice information is the unacquired notice information.

In a case where it is determined in step S401 that there is no management identifier for which the notice information is not acquired, the control unit 35 ends the processing. Then, in a case where it is determined in step S401 that there is the management identifier for which the notice information is not acquired, the control unit 35 acquires one piece of unacquired notice information from the management server 20 in step S402.

Next, in step S403, the control unit 35 determines whether or not the notice information having the identical notice information identifier to the notice information identifier of the acquired notice information is present in the notice information management table in the image forming apparatus 10.

In a case where it is determined in step S403 that the notice information having the identical notice information identifier to the notice information identifier of the acquired notice information is present in the notice information management table in the image forming apparatus 10, the control unit 35 overwrites the acquired notice information to the notice information having the identical notice information identifier in step S404. Then, in step S405, the control unit 35 turns off the read flag of the overwritten notice information.

Then, in a case where it is determined in step S403 that the notice information having the identical notice information identifier to the notice information identifier of the acquired notice information is not present in the notice information management table in the image forming apparatus 10, the control unit 35 adds the acquired notice information to a correction management table as new notice information in step S407.

Finally, in step S406, the control unit 35 records the management identifier of the acquired notice information as the management identifier for which the notice information is acquired. Then, the control unit 35 returns to the processing of step S401.

By executing the processing of steps S401 to S406 described above at the time of activation, notice information having a new management identifier is acquired from the management server 20, and stored in the data storage unit 37 of the image forming apparatus 10.

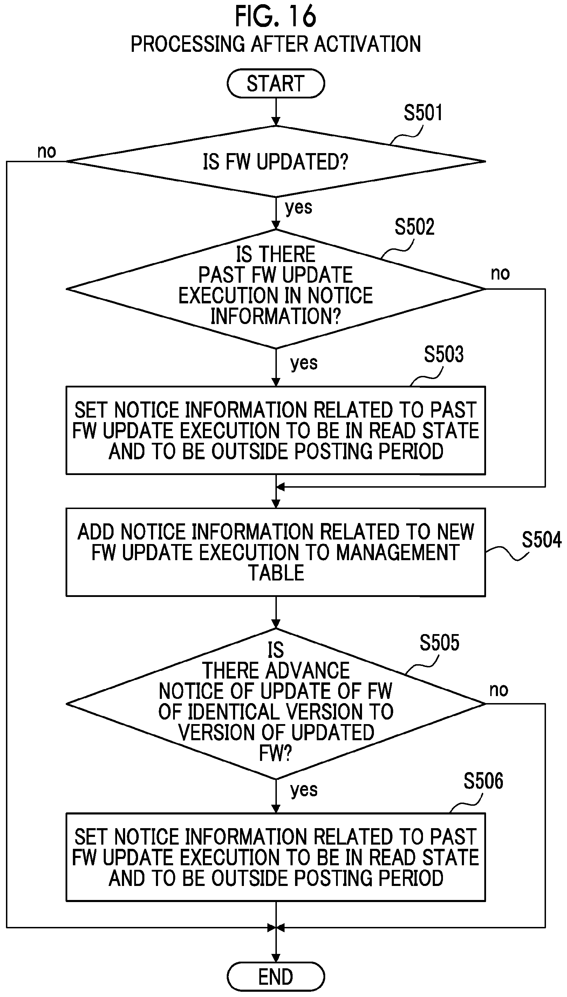

Next, processing after activation in the modification example of the image forming apparatus 10 according to the present exemplary embodiment will be described with reference to a flowchart of FIG. 16.

First, in step S501, the control unit 35 determines whether or not the firmware is updated. For example, the control unit 35 determines whether or not the firmware is updated, by comparing the version of the firmware stored in the previous processing with the current version of the firmware. In the following description, as an example, it will be described that the version of the firmware is updated from 1.1.0 to 1.2.0.

In a case where it is determined in step S501 that the firmware is not updated, the control unit 35 ends the processing. Then, in a case where it is determined in step S501 that the firmware is updated, the control unit 35 determines in step S502 whether or not there is notice information related to the past firmware update execution in the stored notice information.

In a case where it is determined in step S502 that there is the notice information related to the past firmware update execution, the control unit 35 turns on the read flag of the notice information related to the past firmware update execution and sets the notice information to be outside the posting period in step S503. Then, in a case where it is determined in step S502 that there is no notice information related to the past firmware update execution, the control unit 35 proceeds to the next processing without doing anything.

For example, since the version of the firmware updated this time is 1.2.0, the control unit 35 determines that the notice information named "FW update execution" having the notice information identifier "10002" in the notice information management table of FIG. 14 is the notice information related to the past firmware update execution. However, since the read flag of the notice information is already on and the current date and time is already outside the posting period, the control unit 35 proceeds to the next processing without doing anything.

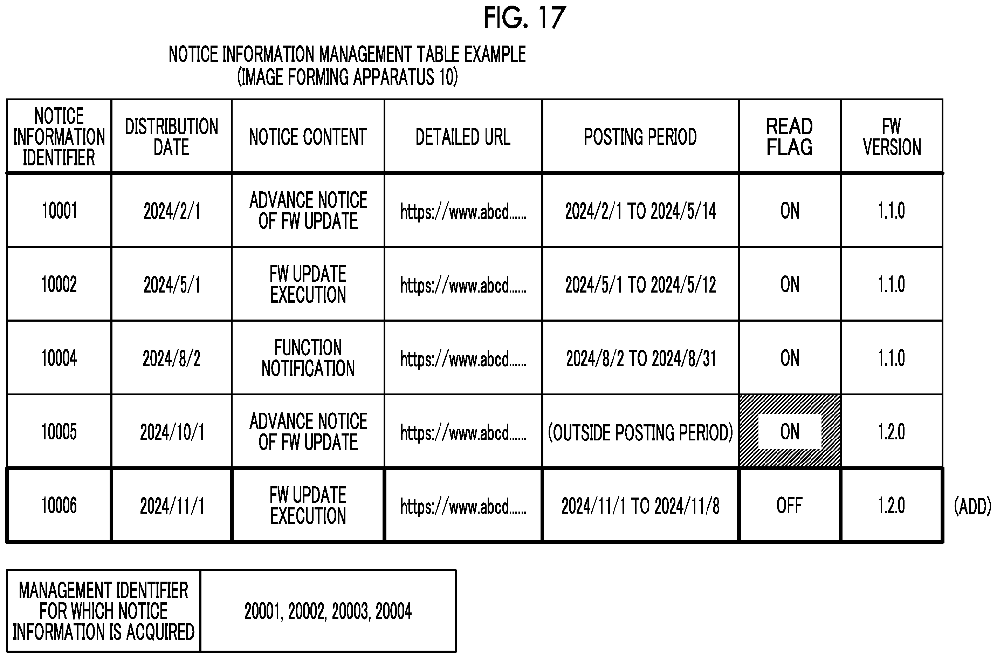

Then, in step S504, the control unit 35 adds notice information related to new FW update execution to the notice information management table by executing the update of the firmware. For example, as shown in FIG. 17, the control unit 35 adds the notice information named "FW update execution" having the notice information identifier "1006" to the notice information management table.

Then, in step S505, the control unit 35 determines whether or not the notice information related to the advance notice of update of the FW of the identical version to the version of the updated firmware is present in the notice information management table. In a case where it is determined in step S505 that the notice information related to the advance notice of update of the FW of the identical version to the version of the updated firmware is not present in the notice information management table, the control unit 35 ends the processing.

Then, in a case where it is determined in step S505 that the notice information related to the advance notice of update of the FW of the identical version to the version of the updated firmware is not present in the notice information management table, the control unit 35 turns on the read flag of the notice information related to the past FW update execution and sets the notice information to be outside the posting period in step S506.

For example, since the version of the firmware updated this time is 1.2.0, the control unit 35 turns on the read flag of the notice information named "advance notice of update of FW" having the notice information identifier "10005" in the notice information management table of FIG. 14, and sets the notice information to be outside the posting period. In a case of setting the notice information to be outside the posting period, the date of the posting period may be changed, or a change to information indicating that the notice information is outside the posting period set in advance may be performed. By executing such processing, in a case where the update of the firmware is executed, the notice information of the advance notice of update of the firmware is displayed in an activation state for both the administrator user and the general user.

Further, the control unit 35 may receive the notice information related to the advance notice of update, which includes the version information of the firmware, from the management server 20, and display the notice information related to the advance notice of update of the firmware and the notice information indicating that the update processing of the firmware is executed, in association with each other, in a case where the update processing of the firmware is executed and the version of the updated firmware matches the version indicated by the version information included in the notice information related to the advance notice of update.

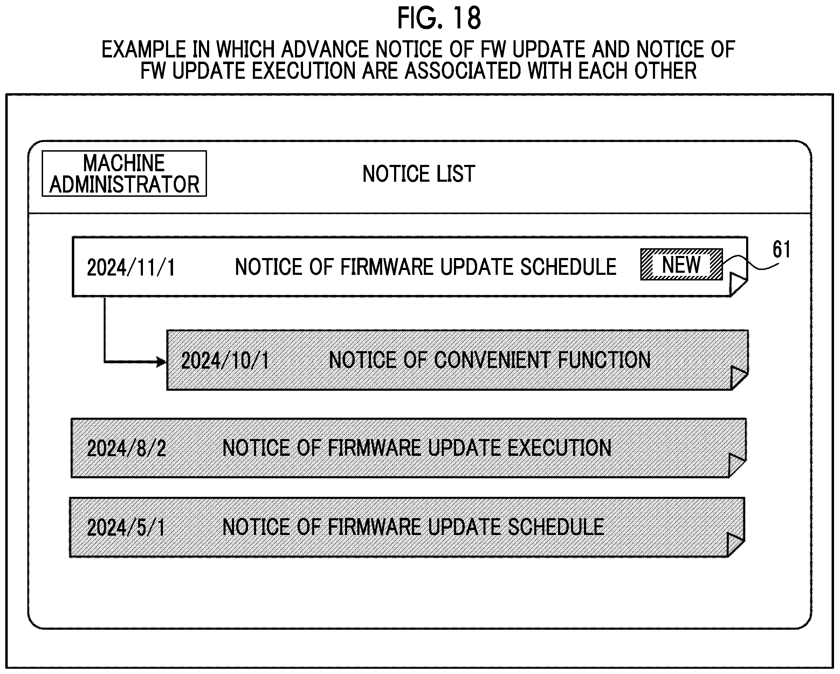

FIGS. 18 to 20 show display screen examples in a case where the notice information related to the advance notice of update of the firmware and the notice information indicating that the update processing of the firmware is executed are displayed in association with each other.

**In** the display screen example shown in FIG. 18, the notice information named "2024/11/1 notice of firmware update execution" and the notice information named "2024/10/1 notice of firmware update schedule" are displayed in association with each other by being connected by an arrow.

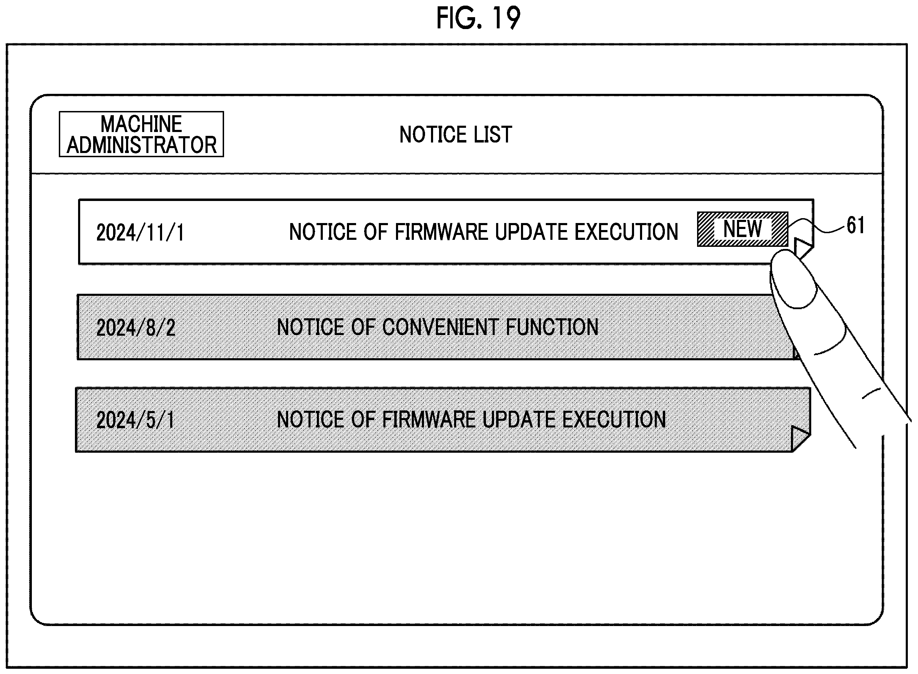

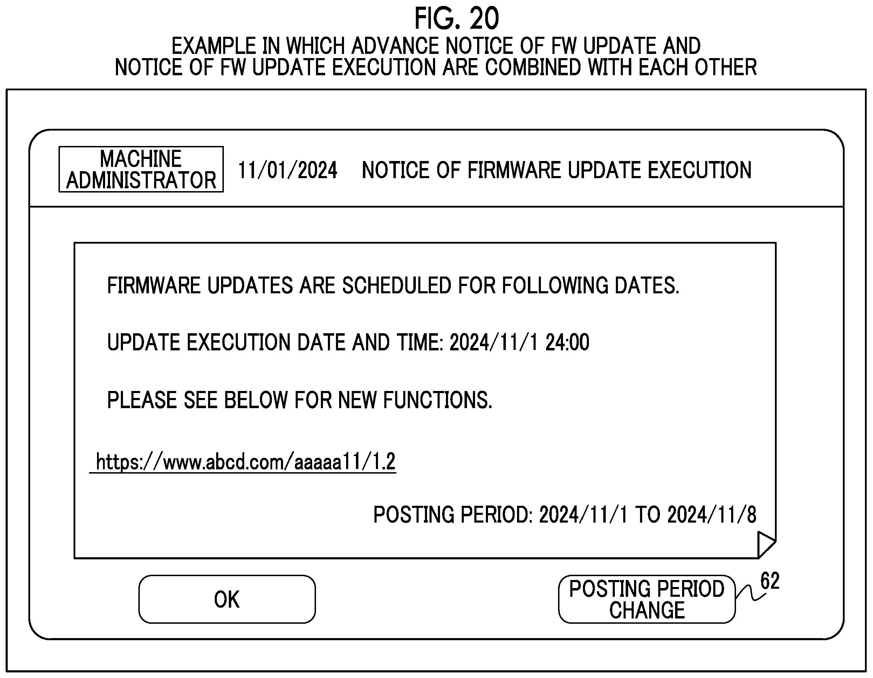

**In** addition, FIGS. 19 and 20 show display screen examples in a case where the notice information related to the advance notice of update of the firmware and the notice information indicating that the update processing of the firmware is executed are combined as one notice information and associated with each other.

In the display screen example shown in FIG. 19, it can be seen that the notice information related to the advance notice of update of the firmware is deleted from the notice list and is not displayed. However, in the display screen example shown in FIG. 19, in a case where the notice information named "2024/11/1 notice of firmware update execution" is selected, the display screen as shown in FIG. 20 is displayed.

In the display screen example shown in FIG. 20, it can be seen that the notification content of the notice information related to the advance notice of update of the firmware is incorporated into the notification content of the notice information indicating that the update processing of the firmware is executed, and is displayed.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The term "system" in the present exemplary embodiment includes both a system configured by a plurality of apparatuses and a system configured with a single apparatus.

The present disclosure is also applicable to a program and a program product.

### [Modification Example]

In the above-described exemplary embodiment, the technology of the present disclosure is applied to the image forming apparatus 10. However, the technology of the present disclosure is not limited to such a case. The technology of the present disclosure can be similarly applied to an information processing apparatus in which an administrator user and a general user are present as users who use the information processing apparatus, and which displays notification information such as notice information obtained from the outside. For example, the technology of the present disclosure can be applied to various information processing apparatuses, such as a personal computer, a digital signage apparatus, a ticket issuing apparatus, a commuting management system, and a library search apparatus, which are used in common.

### [Supplementary Note]

(((1))) An information processing apparatus comprising:
   a processor; and
   a memory,
   wherein the processor is configured to:
      store one or a plurality of pieces of notification information to be notified to a user who uses an information processing apparatus in the memory;
      permit a user who has undergone authentication set in advance to log in as an administrator user who manages the information processing apparatus;
      manage whether each notification information stored in the memory is in a read state in which the administrator user has checked content or in an unread state in which the administrator user has not checked the content;
      display the notification information in the read state, in a first display mode, and display the notification information in the unread state, in a second display mode, in a case where the notification information stored in the memory is displayed and the user who uses the information processing apparatus is logged in as the administrator user; and
      display both the notification information in the read state and the notification information in the unread state, in the second display mode, in a case where the user who uses the information processing apparatus is a general user other than the administrator user.
(((2))) The information processing apparatus according to (((1))), wherein the processor is configured to:
   manage a posting period that is a period in which the notification information is displayed to the general user in the second display mode; and
   display both the notification information in the read state and the notification information in the unread state, in the first display mode, after the posting period has elapsed, in a case where the notification information stored in the memory is displayed and the user who uses the information processing apparatus is the general user other than the administrator user.
(((3))) The information processing apparatus according to (((2))), wherein the processor is configured to:
   display a total count of the notification information in the unread state in a case where the user who uses the information processing apparatus is logged in as the administrator user, and display a total count of the notification information of which a current date and time is within the posting period in a case where the user who uses the information processing apparatus is the general user other than the administrator user.
(((4))) The information processing apparatus according to (((2))) or (((3))), wherein the processor is configured to:
   receive a change of the posting period by the administrator user.
(((5))) The information processing apparatus according to any one of (((1))) to (((4))), wherein the processor is configured to:
   receive notification information required to be notified to the user from an external apparatus and store the received notification information in the memory.
(((6))) The information processing apparatus according to (((5))), wherein the processor is configured to:
   overwrite the notification information stored in the memory with the received notification information in a case where an identifier of the notification information received from the external apparatus is identical to an identifier of the notification information stored in the memory.
(((7))) The information processing apparatus according to (((5))) or (((6))), wherein the processor is configured to:
   store information related to update processing executed in the information processing apparatus in the memory as the notification information, in addition to the notification information received from the external apparatus.
(((8))) The information processing apparatus according to (((7))),
   wherein the update processing is update processing of firmware for controlling an operation of the information processing apparatus, and
   the processor is configured to:
      display notification information related to an advance notice of update of the firmware in the first display mode in a case where the update processing of the firmware is executed in the information processing apparatus, regardless of whether the notification information related to the advance notice of update of the firmware is in the read state or in the unread state.
(((9))) The information processing apparatus according to (((8))), wherein the processor is configured to:
   receive notification information related to the advance notice of update, which includes version information of the firmware, from the external apparatus and display the notification information in the first display mode, regardless of whether the notification information related to the advance notice of update of the firmware is in the read state or in the unread state, in a case where the update processing is executed and a version of the updated firmware matches a version indicated by the version information included in the notification information related to the advance notice of update.
(((10))) The information processing apparatus according to (((8))), wherein the processor is configured to:
   receive notification information related to the advance notice of update of the firmware, which includes version information of the firmware, from the external apparatus and display the notification information related to the advance notice of update of the firmware and notification information indicating that the update processing of the firmware is executed, in association with each other, in a case where the update processing is executed and a version of the updated firmware matches a version indicated by the version information included in the notification information related to the advance notice of update.
(((11))) An information processing system comprising:
   a management server that manages notification information to be notified to a user who uses an information processing apparatus; and
   the information processing apparatus including a processor, and a memory, in which the processor is configured to:
      receive notification information required to be notified to the user from the management server and store one or a plurality of pieces of received notification information in the memory;
      permit a user who has undergone authentication set in advance to log in as an administrator user who manages the information processing apparatus;
      manage whether each notification information stored in the memory is in a read state in which the administrator user has checked content or in an unread state in which the administrator user has not checked the content;
      display the notification information in the read state, in a first display mode, and display the notification information in the unread state, in a second display mode, in a case where the notification information stored in the memory is displayed and the user who uses the information processing apparatus is logged in as the administrator user; and
      display both the notification information in the read state and the notification information in the unread state, in the second display mode, in a case where the user who uses the information processing apparatus is a general user other than the administrator user.
(((12))) A program causing a computer to execute a process comprising:
   storing one or a plurality of pieces of notification information to be notified to a user who uses an information processing apparatus in a memory;
   permitting a user who has undergone authentication set in advance to log in as an administrator user who manages the information processing apparatus;
   managing whether each notification information stored in the memory is in a read state in which the administrator user has checked content or in an unread state in which the administrator user has not checked the content;
   displaying the notification information in the read state, in a first display mode, and displaying the notification information in the unread state, in a second display mode, in a case where the notification information stored in the memory is displayed and the user who uses the information processing apparatus is logged in as the administrator user; and
   displaying both the notification information in the read state and the notification information in the unread state, in the second display mode, in a case where the user who uses the information processing apparatus is a general user other than the administrator user.

With the information processing apparatus according to (((1))), in a case where there are the administrator user and the general user among the users who use the information processing apparatus, the administrator user may grasp the new notification information, and the general user may be prevented from overlooking the new notification information in a case where the notification information is displayed to the user.

With the information processing apparatus according to (((2))), the notification information may be displayed in the first display mode to the general user only within the set posting period.

With the information processing apparatus according to (((3))), the administrator user and the general user may be allowed to grasp the total count of the notification information of which the content is required to be checked.

With the information processing apparatus according to (((4))), the administrator user may change a period during which the notification information is displayed to the general user in the second display mode.

With the information processing apparatus according to (((5))), the notification information set in the external apparatus such as the external management server may be displayed to the user of the information processing apparatus.

With the information processing apparatus according to (((6))), the content of the notification information that has already been received by the information processing apparatus from the external apparatus may be changed.

With the information processing apparatus according to (((7))), the user who uses the information processing apparatus may be notified of the information related to the update processing executed in the information processing apparatus.

With the information processing apparatus according to (((8))), in a case where the update processing of the firmware is executed, the notification information related to the advance notice of update for which the content does not need to be checked may be prevented from being displayed in the second display mode.

With the information processing apparatus according to (((9))), in a case where the update processing of the firmware is executed, the notification information related to the advance notice of update corresponding to the version of the firmware on which the update processing is executed may be prevented from being displayed in the second display mode.

With the information processing apparatus according to (((10))), in a case where the update processing of the firmware is executed, it is easy to check that the update processing of the firmware for which the advance notice of update is issued is executed.

With the information processing system according to (((11))), in a case where there are the administrator user and the general user among the users who use the information processing apparatus, the administrator user may grasp the new notification information, and the general user may be prevented from overlooking the new notification information in a case where the notification information is displayed to the user.

With the program according to (((12))), in a case where there are the administrator user and the general user among the users who use the information processing apparatus, the administrator user may grasp the new notification information, and the general user may be prevented from overlooking the new notification information in a case where the notification information is displayed to the user.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: image forming apparatus
11: CPU
12: memory
13: storage device
14: communication interface
15: user interface device
16: scan unit
17: image forming unit
18: control bus
20: management server
30: Internet
31: authentication unit
32: operation input unit
33: display unit
34: data transmission-and-reception unit
35: control unit
36: image reading unit
37: data storage unit
38: image output unit
41: menu icon
51: notice icon
52: unread count icon
61: new arrival display icon
62: posting period change button

## Claims

1. An information processing apparatus comprising:
a processor; and
a memory,
wherein the processor is configured to:
store one or a plurality of pieces of notification information to be notified to a user who uses an information processing apparatus in the memory;
permit a user who has undergone authentication set in advance to log in as an administrator user who manages the information processing apparatus;
manage whether each notification information stored in the memory is in a read state in which the administrator user has checked content or in an unread state in which the administrator user has not checked the content;
display the notification information in the read state, in a first display mode, and display the notification information in the unread state, in a second display mode, in a case where the notification information stored in the memory is displayed and the user who uses the information processing apparatus is logged in as the administrator user; and
display both the notification information in the read state and the notification information in the unread state, in the second display mode, in a case where the user who uses the information processing apparatus is a general user other than the administrator user.

2. The information processing apparatus according to claim 1, wherein the processor is configured to:
manage a posting period that is a period in which the notification information is displayed to the general user in the second display mode; and
display both the notification information in the read state and the notification information in the unread state, in the first display mode, after the posting period has elapsed, in a case where the notification information stored in the memory is displayed and the user who uses the information processing apparatus is the general user other than the administrator user.

3. The information processing apparatus according to claim 2, wherein the processor is configured to:
display a total count of the notification information in the unread state in a case where the user who uses the information processing apparatus is logged in as the administrator user, and display a total count of the notification information of which a current date and time is within the posting period in a case where the user who uses the information processing apparatus is the general user other than the administrator user.

4. The information processing apparatus according to claim 2 or 3, wherein the processor is configured to:
receive a change of the posting period by the administrator user.

5. The information processing apparatus according to any one of claims 1 to 4, wherein the processor is configured to:
receive notification information required to be notified to the user from an external apparatus and store the received notification information in the memory.

6. The information processing apparatus according to claim 5, wherein the processor is configured to:
overwrite the notification information stored in the memory with the received notification information in a case where an identifier of the notification information received from the external apparatus is identical to an identifier of the notification information stored in the memory.

7. The information processing apparatus according to claim 5 or 6, wherein the processor is configured to:
store information related to update processing executed in the information processing apparatus in the memory as the notification information, in addition to the notification information received from the external apparatus.

8. The information processing apparatus according to claim 7,
wherein the update processing is update processing of firmware for controlling an operation of the information processing apparatus, and
the processor is configured to:
display notification information related to an advance notice of update of the firmware in the first display mode in a case where the update processing of the firmware is executed in the information processing apparatus, regardless of whether the notification information related to the advance notice of update of the firmware is in the read state or in the unread state.

9. The information processing apparatus according to claim 8, wherein the processor is configured to:
receive notification information related to the advance notice of update, which includes version information of the firmware, from the external apparatus and display the notification information in the first display mode, regardless of whether the notification information related to the advance notice of update of the firmware is in the read state or in the unread state, in a case where the update processing is executed and a version of the updated firmware matches a version indicated by the version information included in the notification information related to the advance notice of update.

10. The information processing apparatus according to claim 8, wherein the processor is configured to:
receive notification information related to the advance notice of update of the firmware, which includes version information of the firmware, from the external apparatus and display the notification information related to the advance notice of update of the firmware and notification information indicating that the update processing of the firmware is executed, in association with each other, in a case where the update processing is executed and a version of the updated firmware matches a version indicated by the version information included in the notification information related to the advance notice of update.

11. An information processing system comprising:
a management server that manages notification information to be notified to a user who uses an information processing apparatus; and
the information processing apparatus including a processor, and a memory, in which the processor is configured to:
receive notification information required to be notified to the user from the management server and store one or a plurality of pieces of received notification information in the memory;
permit a user who has undergone authentication set in advance to log in as an administrator user who manages the information processing apparatus;
manage whether each notification information stored in the memory is in a read state in which the administrator user has checked content or in an unread state in which the administrator user has not checked the content;
display the notification information in the read state, in a first display mode, and display the notification information in the unread state, in a second display mode, in a case where the notification information stored in the memory is displayed and the user who uses the information processing apparatus is logged in as the administrator user; and
display both the notification information in the read state and the notification information in the unread state, in the second display mode, in a case where the user who uses the information processing apparatus is a general user other than the administrator user.

12. A program causing a computer to execute a process comprising:
storing one or a plurality of pieces of notification information to be notified to a user who uses an information processing apparatus in a memory;
permitting a user who has undergone authentication set in advance to log in as an administrator user who manages the information processing apparatus;
managing whether each notification information stored in the memory is in a read state in which the administrator user has checked content or in an unread state in which the administrator user has not checked the content;
displaying the notification information in the read state, in a first display mode, and displaying the notification information in the unread state, in a second display mode, in a case where the notification information stored in the memory is displayed and the user who uses the information processing apparatus is logged in as the administrator user; and
displaying both the notification information in the read state and the notification information in the unread state, in the second display mode, in a case where the user who uses the information processing apparatus is a general user other than the administrator user.
